# FASCICULE DE BREVET EUROPEEN

(11) **EP 2 760 151 B1**
(45) Date de publication et mention de la délivrance du brevet: **06.11.2019**
(21) Numéro de dépôt: 14152155.9
(22) Date de dépôt: 22.01.2014
(51) Int. Cl.: H04L 1/00, H04B 5/00

(54) **Procédé de traitement d'erreurs de transmission, en particulier celles dues au bruit, lors d'une communication sans contact entre une carte et un lecteur.**
Verfahren zur Behandlung von Übertragungsfehlern, insbesondere solcher aufgrund von Kanalrauschen, bei der kontaktlosen Kommunikation zwischen einer Karte und einem Lesegerät
Method for processing transmission errors, in particular noise, during a contactless communication between a card and a reader.

(30) Priorité: 24.01.2013 FR 1350593
(43) Date de publication de la demande: 30.07.2014
(73) Titulaire: STMicroelectronics (Rousset) SAS, 13790 Rousset (FR); Melexis Technologies SA, 2022 Bevaix (CH)
(72) Inventeur: Bousquet, Thierry, 13790 Chateauneuf le rouge (FR); Zhuk, Oleksandr, 2028 Vaumarcus (CH)
(74) Mandataire: Casalonga

(56) Documents cités:
- WO-A1-2008/091065
- WO-A1-2009/144534
- WO-A2-2008/026112
- US-A1- 2004 257 203
- US-A1- 2007 069 859
- US-A1- 2008 291 852
- US-A1- 2009 166 419

## Description

L'invention concerne la communication, par exemple sans fil, entre un dispositif, par exemple une carte à puce sans contact ou un téléphone mobile émulé en mode carte, et un lecteur, par exemple sans contact, et plus particulièrement le traitement d'erreurs de transmission dues à des perturbations électromagnétiques (EMD : « ElectroMagnetic Distrurbances) lors de transmission d'informations de la carte vers le lecteur effectuées conformément à la spécification EMV sans contact (EMVCo : EMV Contactless).

La communication champ proche, plus connue par l'homme du métier sous la dénomination anglosaxonne NFC (« Near Field Communication ») est une technologie de connectivité sans fil qui permet une communication sur une courte distance, par exemple 10 cm, entre des dispositifs électroniques, comme par exemple des cartes à puce sans contact ou des téléphones mobiles émulés en mode carte, et des lecteurs.

La technologie NFC est particulièrement adaptée pour connecter tout type de dispositif utilisateur et permet des communications rapides et faciles.

Un dispositif sans contact est un dispositif capable d'échanger des informations via une antenne avec un autre dispositif sans contact selon un protocole de communication sans contact.

Un dispositif NFC, qui est un dispositif sans contact, est un dispositif compatible avec la technologie NFC.

La technologie NFC est une plate-forme technologique ouverte normalisée dans la norme ISO/IEC 18092 et ISO/IEC 21481 mais incorpore de nombreuses normes déjà existantes comme par exemple les protocoles type A et type B définis dans la norme ISO-14443 qui peuvent être des protocoles de communication utilisables dans la technologie NFC.

Outre sa fonction classique de téléphone, un téléphone mobile cellulaire peut être utilisé (s'il est équipé de moyens spécifiques) pour échanger des informations avec un autre dispositif sans contact, par exemple un lecteur sans contact, en utilisant un protocole de communication sans contact utilisable dans la technologie NFC.

Ceci permet d'échanger des informations entre le lecteur sans contact et des éléments sécurisés situés dans le téléphone mobile. De nombreuses applications sont ainsi possibles comme la billetterie mobile dans les transports publics (le téléphone mobile se comporte comme un ticket de transport) ou bien le paiement mobile (le téléphone mobile se comporte comme une carte de paiement).

Par ailleurs, Europay Mastercard Visa, abrégé par le sigle EMV, est un standard international de sécurité des cartes de paiement du type carte à puce initié par le consortium EMVCo. La majeure partie, voire l'intégralité des cartes bancaires à puce sont conformes au standard EMV de même que la majeure partie voire l'ensemble du parc des terminaux de paiement électroniques. Les différents livres regroupant les spécifications du standard EMV, en particulier la version 2.3 de novembre 2011, sont disponibles auprès du consortium EMVCo.

Par ailleurs, des spécifications, intitulées « EMV Contactless Specifications for Payment Systems » et comportant dans la version 2.1 de mars 2011 disponible auprès du consortium EMVCo, quatre livres, ont trait notamment au protocole de communication sans contact utilisé pour effectuer des transactions bancaires entre deux dispositifs sans contact, et conforme à la norme EMV. Le protocole de communication pour la norme EMV sans contact est ainsi principalement basé sur le protocole décrit dans la norme ISO/IEC 14443.

Un lecteur sans contact comprend généralement un module d'émission/réception, encore appelé « tête radiofréquence » (RF front end) destiné à être en couplage de proximité avec la carte sans contact ou le téléphone mobile émulé en mode carte. Ce module d'émission/réception est contrôlé par un microcontrôleur externe qui est couplé par un bus au module d'émission/réception. Le module d'émission/réception reçoit les trames transmises par la carte, extrait les bits de données (représentant par exemple des réponses à des commandes) contenus dans ces trames et les transmet au microcontrôleur externe.

En sens inverse, le module d'émission/réception reçoit des bits de données (représentant par exemple des commandes) destinés à la carte, les encapsule dans des trames et transmet ces trames à la carte.

Les transmissions d'informations entre la carte et le lecteur peuvent être entachées d'erreurs.

On parle d'erreur de transmission lorsqu'une trame invalide est reçue, par exemple lorsque la modulation du signal ou le codage des bits ou le format (structure) de la trame ne sont conformes aux spécifications régissant la communication sans contact entre la carte et le lecteur.

Certaines de ces erreurs peuvent être des erreurs dues au bruit (« noise »), par exemple lorsque la carte est trop éloignée du lecteur ou lorsque le microcontrôleur contenu dans la carte génère lui-même du bruit. Ce bruit est également désigné sous le vocable de « perturbation électromagnétique » (EMD : ElectroMagnetic Disturbance).

Par ailleurs il peut être spécifié dans certains cas, comme par exemple dans les spécifications précitées intitulées « EMV Contactless Specifications for Payment Systems », que certaines erreurs de transmission entachant une réponse de la carte doivent être ignorées par le lecteur et que celui-ci doit être alors capable de traiter une nouvelle réponse correcte de la carte au plus tard à l'expiration d'une durée spécifiée après la fin de la réponse entachée de ladite erreur devant être ignorée.

D'autres erreurs de transmission bien définies doivent par contre être traitées par le lecteur conduisant alors généralement le microcontrôleur externe à envoyer une commande au module d'émission/réception de façon à réinitialiser le champ magnétique généré par le module d'émission/réception à l'intérieur du volume dans lequel la carte et le lecteur peuvent mutuellement communiquer.

La gestion des erreurs de transmission, que ce soit celles devant être ignorées par le lecteur, notamment les erreurs dues au bruit, ou celles ne devant pas être ignorées pour être traitées, est un enjeu majeur pour la robustesse de communication et la fiabilité.

Des spécifications de tests, par exemple celles contenues dans le document intitulé EMVCo Type Approval Contactless Terminal Level 1, PCD Digital Test Bench & Test Cases, version 2.1a, octobre 2011, et disponibles auprès du consortium EMVCo, ont été établies pour s'assurer que les lecteurs sont notamment capables de satisfaire aux exigences spécifiées en présence notamment de perturbations du type EMD.

La publication US 2009/0166419 A1 décrit un procédé qui comprend la réception d'un signal provenant d'un périphérique intelligent sans fil et la recherche d'une erreur dans une partie du signal. En réponse à la détection de l'erreur, un indicateur d'erreur est défini dans un registre d'erreur pour indiquer la présence de bruit dans la partie de signal. En réponse à la détection de l'indicateur d'erreur par un contrôleur, une commande pour éliminer une partie de signal est émise.

Différents aspect, modes de mise en œuvre et de réalisation de l'invention sont définis par les revendications annexées.

Selon un mode de mise en œuvre et de réalisation, il est proposé un procédé et un lecteur permettant de gérer efficacement les erreurs de transmission devant être ignorées, en particulier celles dues aux perturbations électromagnétiques.

Selon un mode de mise en œuvre et de réalisation, il est également proposé un procédé et un lecteur permettant de satisfaire les tests de certification EMVCo liés aux perturbations « EMD », en particulier les spécifications de test contenues dans le document précité intitulé EMVCo Type Approval Contactless Terminal Level 1, PCD Digital Test Bench & Test Cases, version 2.1a, octobre 2011.

Selon un aspect, il est proposé un procédé de traitement d'erreurs de transmission lors d'une communication sans contact d'informations entre un dispositif, par exemple une carte, et un lecteur, les informations étant transmises sous forme de trames à un module d'émission/réception du lecteur en couplage sans contact avec ledit dispositif et contrôlé par un module de contrôle couplé au module d'émission/réception, lesdites informations étant extraites desdites trames au sein du module d'émission/réception pour être délivrées au module de contrôle, le procédé comprenant une détection d'erreurs de transmission devant être ignorées, par exemple les erreurs dues à des perturbations électromagnétiques, intégralement effectuée au sein du module d'émission/réception.

Ainsi d'une part on ne gère pas la question des erreurs de transmission dues au bruit par exemple en tentant de minimiser les perturbations qui en sont à l'origine, par exemple par des moyens matériels du type filtre, mais en effectuant une détection spécifique de ces erreurs dans le lecteur et qui plus est dans le module d'émission/réception lui-même, alors que celui-ci n'est pas à l'origine prévu pour cela.

Et effectuer une telle détection intégralement dans le module d'émission/réception, et non par exemple au moins partiellement dans le module de contrôle, permet non seulement de discriminer plus efficacement le type d'erreur, c'est-à-dire de différencier plus efficacement les erreurs devant être ignorées de celles devant être traitées, mais également plus rapidement.

Le procédé comprend donc avantageusement une discrimination entre les erreurs devant être ignorées, par exemple du bruit, et les erreurs devant être traitées, par exemple des données effectivement corrompues, intégralement effectuée dans le module d'émission/réception au cours de la communication proprement dite entre le dispositif et le lecteur, et non pas à l'issue de cette communication.

Par ailleurs, il est avantageusement prévu que le procédé comprenne également, après détection d'une erreur de transmission devant être ignorée, et avant l'expiration d'une durée de référence, un auto-placement du module d'émission/réception dans un état dans lequel il est prêt à traiter une nouvelle trame en provenance du dispositif.

En d'autres termes, après détection d'une erreur de transmission devant être ignorée, le module d'émission/réception se place de lui-même dans un état dans lequel il est prêt à traiter une nouvelle trame en provenance du dispositif, sans qu'il soit nécessaire pour cela qu'il reçoive une commande spécifique du module de contrôle externe.

Le module d'émission/réception est ainsi prêt très rapidement (quasi instantanément) à traiter une nouvelle trame et satisfait donc les exigences temporelles fixées par les spécifications de test.

Dans le cas où une erreur de transmission est détectée comme étant une erreur devant être traitée correspondant par exemple à une réception de données effectivement corrompues suite à l'émission d'une requête, le procédé prévoit avantageusement une ré-émission de ladite requête dès que cette détection a été effectuée, en particulier sans attendre l'expiration de ladite durée de référence.

Selon un mode de mise en œuvre, la détection d'une erreur de transmission devant être ignorée comprend l'analyse par le module d'émission/réception de la structure et/ou du contenu des trames reçues et/ou de règles de codage des bits transmis au sein de ces trames.

Le module analyse donc notamment des éléments de niveau 2 (par exemple du type niveau (ou couche) 2 de la norme ISO/IEC 14443), tels que le format des trames, la phase des signaux reçus, les règles de codage des bits, ce qui permet de discriminer plus efficacement et plus rapidement le type d'erreurs de transmission que si on n'utilisait que des éléments de niveau 3 (par exemple du type niveau (ou couche) 3 de la norme ISO/IEC 14443), c'est-à-dire par exemple les bits de données extraits des trames reçues, tels que ceux qui sont délivrés au module de contrôle externe du module d'émission/réception.

Comme indiqué ci-avant le protocole de communication pour les spécifications EMV sans contact (« EMV Contactless ») est basé sur le protocole décrit dans la norme ISO/IEC 14443 bien connue de l'homme du métier. Les trames transmises depuis la carte vers le lecteur et décrites dans les spécifications « EMV Contactless » peuvent être du type A ou du type B avec quelques différences structurelles par rapport aux trames de type A ou B décrites dans la norme ISO/IEC 14443.

Selon un mode de mise en œuvre utilisant des trames du type A telles que décrites dans les spécifications « EMV contactless », une trame transmise par la carte peut comprendre une indication de début de trame, plusieurs octets de données, une indication de contrôle par redondance cyclique ;
par ailleurs, conformément aux spécifications « EMV Contactless », les bits contenus dans ces trames sont transmis codés par un codage depuis la carte vers le lecteur, par exemple par un codage du type Manchester bien connu de l'homme du métier ;
et ladite analyse en vue de la détection d'une erreur de transmission devant être ignorée comprend une analyse de l'indication de début de trame, une analyse de l'indication de contrôle par redondance cyclique, une analyse du nombre d'octets de chaque trame, une analyse de la présence ou non de bits résiduels dans une trame, et en cas de présence d'au moins un bit résiduel, une détermination de la violation ou non des règles de codage de ce ou de ces bits résiduels.

Plus particulièrement une erreur de transmission est considérée comme étant une erreur devant être ignorée dès l'occurrence de l'un au moins des cas suivants :
une erreur est détectée lors de l'analyse de l'indication de début de trame,
une présence d'au moins un bit résiduel est détectée dans une trame comportant un nombre d'octets inférieur à un seuil, par exemple quatre,
une présence d'au moins un bit résiduel est détectée dans une trame comportant un nombre d'octets supérieur audit seuil avec violation des règles de codage de ce ou de ces bits résiduels,
une erreur est détectée lors de l'analyse de l'indication de contrôle par redondance cyclique dans une trame comportant un nombre d'octets inférieur audit seuil.

Ainsi dès que l'un au moins des cas ci-dessus se produit, on détecte (on considère) sans plus attendre qu'il s'agit d'une erreur de transmission devant être ignorée, ce qui permet de replacer très rapidement le module d'émission/réception dans son état de réception pour être prêt à recevoir et traiter une nouvelle trame en provenance de la carte par exemple.

Par ailleurs, le fait de vérifier si les règles de codage des éventuels bits résiduels reçus ont été violées ou non, permet là encore de discriminer une présence de tels bits résiduels due au bruit d'une présence volontaire de tels bits au sein d'une trame valide résultant par exemple de l'utilisation d'un protocole de communication très spécifique, par exemple un protocole propriétaire.

Selon un mode de mise en œuvre utilisant des trames de type B telles que décrites dans les spécifications « EMV contactless », une trame transmise par la carte peut comprendre plusieurs caractères comportant chacun un octet de données, et une indication de contrôle par redondance cyclique,
et ladite analyse en vue de la détection d'une erreur de transmission devant être ignorée, comprend une analyse de la structure des caractères, une analyse de l'indication de contrôle par redondance cyclique et une analyse du nombre d'octets de chaque trame.

Plus particulièrement une erreur de transmission est considérée comme étant une erreur devant être ignorée dès l'occurrence de l'un au moins des cas suivants :
une erreur est détectée dans une trame comportant un nombre d'octets inférieur à un seuil, par exemple quatre, lors de l'analyse de la structure des caractères, ou lors de l'analyse de l'indication de contrôle par redondance cyclique.

De façon à permettre une analyse plus fine des erreurs de transmissions, notamment au niveau de l'historique et de la détermination précise des différents cas d'erreurs, le procédé comprend en outre une délivrance au module de contrôle d'une indication de code d'erreur associé à chacun desdits cas.

Selon un autre aspect il est proposé un module d'émission/réception d'un lecteur, destiné d'une part à être en couplage sans contact avec un dispositif sans contact, par exemple une carte sans contact, et d'autre part à être couplé à et contrôlé par un module de contrôle, le module d'émission/réception comprenant
des moyens de réception configurés pour recevoir sous forme de trames des information en provenance de ladite carte,
des moyens de traitement configurés pour extraire lesdites informations desdites trame et les délivrer au module de contrôle, et
des moyens de détection configurés pour effectuer une détection d'erreurs de transmission devant être ignorées.

Les moyens de détection sont par conséquent avantageusement configurés pour différentier (discriminer) au cours de la communication proprement dite avec le dispositif, une erreur de transmission devant être ignorée d'une erreur de transmission devant être traitée.

Selon un mode de réalisation, le module d'émission/réception comprend en outre des moyens de commande configurés pour, après détection d'une erreur de transmission devant être ignorée, et avant l'expiration d'une durée de référence, placer les moyens de réception et les moyens de détection dans un état dans lequel ils sont prêts à recevoir et à traiter une nouvelle trame en provenance du dispositif.

Selon un mode de réalisation les moyens de détection sont configurés pour analyser la structure et/ou le contenu des trames reçues et/ou des règles de codage des bits transmis au sein de ces trames.

Selon un mode de réalisation dans lequel une trame comprend une indication de début de trame, plusieurs octets de données et une indication de contrôle par redondance cyclique et dans lequel les bits contenus dans ces trames sont transmis codés par un codage, les moyens de détection sont configurés pour analyser l'indication de début de trame, l'indication de contrôle par redondance cyclique, le nombre d'octets de chaque trame, la présence ou non de bits résiduels dans une trame, et en cas de présence d'au moins un bit résiduel, déterminer la violation ou non des règles de codage de ce ou de ces bits résiduels.

Selon un mode de réalisation les moyens de détection sont configurés pour considérer une erreur de transmission comme étant une erreur devant être ignorée dès l'occurrence de l'un au moins des cas suivants :
une erreur est détectée lors de l'analyse de l'indication de début de trame,
une présence d'au moins un bit résiduel est détectée dans une trame comportant un nombre d'octets inférieur à un seuil,
une présence d'au moins un bit résiduel est détectée dans une trame comportant un nombre d'octets supérieur audit seuil avec violation des règles de codage de ce ou de ces bits résiduels,
une erreur est détectée lors de l'analyse de l'indication de contrôle par redondance cyclique dans une trame comportant un nombre d'octets inférieur audit seuil.

Selon un mode de réalisation dans lequel une trame comprend plusieurs caractères comportant chacun un octet de données et une indication de contrôle par redondance cyclique, les moyens de détection sont configurés pour analyser l'indication de début de trame, l'indication de fin de trame, la structure des caractères, l'indication de contrôle par redondance cyclique, le nombre d'octets de chaque trame, l'intervalle temporel entre chaque caractère.

Selon un mode de réalisation les moyens de détection sont configurés pour considérer une erreur de transmission comme étant une erreur devant être ignorée dès l'occurrence de l'un au moins des cas suivants :
une erreur est détectée dans une trame comportant un nombre d'octets inférieur à un seuil, lors de l'analyse de la structure des caractères, ou lors de l'analyse de l'indication de contrôle par redondance cyclique.

Selon un mode de réalisation les moyens de commande sont en outre configurés pour délivrer en outre au module de contrôle une indication de code d'erreur associé à chacun desdits cas.

Selon un autre aspect il est proposé un lecteur, comprenant un module d'émission/réception tel que défini ci-avant, par exemple formé par une puce électronique, et un module de contrôle, par exemple formé par une autre puce électronique, couplé au module d'émission/réception.

D'autres avantages et caractéristiques de l'invention apparaîtront à l'examen de la description détaillée de modes de mise en œuvre et de réalisation, nullement limitatifs, et des dessins annexés sur lesquels :

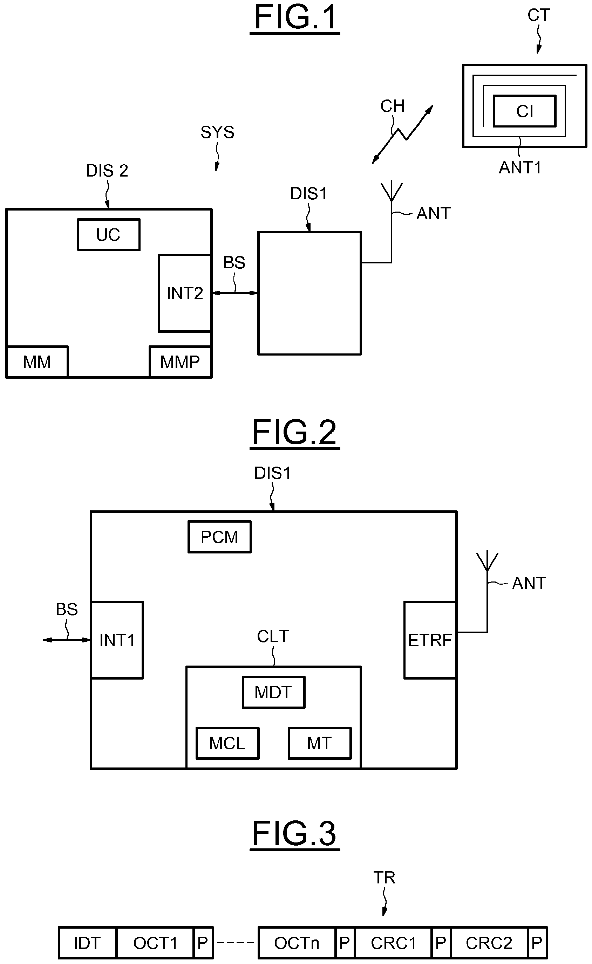

les figures 1 à 7, essentiellement schématiques, sont relatives à différents modes de mise en œuvre et de réalisation de l'invention.

Sur la figure 1, la référence SYS désigne un lecteur sans contact comportant un premier module intégré DIS1 et un deuxième module intégré DIS2. Les modules DIS1 et DIS2 sont ici des circuits intégrés ou puces, distincts, capables d'échanger des informations sur un bus de liaison BS.

Dans l'exemple décrit ici, le module DIS1 est un module d'émission/réception, radiofréquence, équipé d'une antenne ANT et capable d'émettre et/ou de recevoir des informations sur un canal de transmission CH, ici un canal de transmission radiofréquence.

Les informations transmises sur le canal de transmission CH le sont sous forme de trames comportant notamment des octets contenant les bits desdites informations.

Ces trames peuvent être par exemple conformes dans leur structure, à celles décrites dans les spécifications « EMV Contactless » ou à celles décrites dans la norme ISO/IEC 14 443 que ce soit pour un protocole type A ou type B.

Le lecteur SYS peut ainsi dialoguer avec un autre équipement ou dispositif sans contact, par exemple ici une carte à puce sans contact CT, ou bien en variante un téléphone mobile émulé en mode carte et compatible avec la technologie NFC, en particulier pour effectuer des transactions bancaires, par exemple des opérations de paiement conformément aux spécifications EMV et plus précisément EMV sans contact (« EMV contactless »).

L'autre module intégré DIS2, est par exemple un microcontrôleur réalisé sous la forme d'une puce, distincte de la puce DIS1, et destiné notamment à contrôler le module d'émission/réception DIS2.

Dans l'exemple décrit ici, le microcontrôleur DIS2 est un microcontrôleur ayant une unité centrale UC classique, par exemple huit bits, associée à différentes mémoires dont une mémoire programme MM.

Le microcontrôleur DIS2 peut comporter également une mémoire supplémentaire MMP, ici une mémoire protégée, comportant un algorithme de cryptage/décryptage des informations à émettre.

Outre les moyens qui viennent d'être décrits, le module de contrôle DIS2 comporte également une interface INT2 avec le bus BS, qui peut être par exemple un bus SPI, I²C, UART, USB.

Le module ou tête d'émission/réception radiofréquence DIS1, présente une structure classique de tête d'émission/réception, compatible par exemple avec la norme ISO 14443A ou B ou encore les normes ISO 15693 ou ISO 18092, à une exception près dont on reviendra plus en détail ci-après, et concernant la détection d'erreurs de transmission à ignorer entachant des trames en provenance de la carte.

Le rôle du module d'émission/réception DIS1 est entre autres de traiter les erreurs de transmission devant être ignorées tandis que le rôle du module de contrôle externe DIS2 est entre autres de traiter les erreurs de transmission qui ne doivent pas être ignorées.

Si l'on se réfère maintenant plus particulièrement à la figure 2, on voit que la tête d'émission/réception DIS1 comporte un port d'entrée/sortie ou interface INT1 avec le bus de liaison BS ainsi qu'un étage radiofréquence ETRF connecté à l'antenne ANT. La structure de l'étage radiofréquence ETRF est classique et connue en soi et comporte notamment des moyens de modulation/démodulation des trames, ainsi que des oscillateurs locaux permettant d'ajuster la fréquence porteuse sur le canal de transmission CH.

L'étage ETRF et l'antenne ANT forment ici moyens de réception configurés pour recevoir sous forme de trames des informations en provenance de la carte CT.

Le dispositif DIS1 comporte également un microcontrôleur CTL comportant des moyens de traitement MT configurés pour extraire lesdites informations desdites trames et les délivrer au module de contrôle DIS2 et des moyens de détection MDT configurés pour effectuer une détection d'erreurs de transmission devant être ignorées.

Le microcontrôleur CTL comprend également des moyens de commande MCL aptes à placer ou à replacer l'étage radiofréquence ETRF et les moyens de détection MDT dans un état où ils sont prêt à recevoir et analyser une trame en provenance de la carte.

Les moyens de traitement MT sont également aptes, en émission, à encapsuler les bits d'informations au sein de trames ayant une structure compatible avec celle prévue par la norme de transmission utilisée.

Les moyens MT, MDT et MCL peuvent être par exemple réalisés de façon logicielle.

Le module DIS1 comporte également classiquement un bloc PCM de gestion d'alimentation.

D'une façon classique et connue en soi, la combinaison « module DIS1-carte CI » se comporte comme un transformateur. Un courant alternatif traverse l'antenne ANT du lecteur et crée un champ électromagnétique qui induit un courant dans l'antenne inductive ANT1 de la carte. La carte convertit ce champ électromagnétique (ou champ radiofréquence) transmis en une tension continue par exemple au moyen d'un pont de diodes et utilise cette tension continue pour alimenter le circuit électronique de traitement CI de la carte.

L'énergie radiofréquence transmise par la tête DIS1 est aussi utilisée pour véhiculer les informations à destination de la carte par une modulation de la porteuse (13,56 MHz dans le cas de la norme ISO/IEC 14443).

Le circuit de traitement de la carte décode, traite ces informations et répond au lecteur au moyen d'une modulation de charge basée sur le couplage électromagnétique (c'est-à-dire l'inductance mutuelle) entre la tête radiofréquence DIS1 et la carte. Plus précisément le circuit électronique modifie le courant circulant dans l'antenne de la carte en fonction des informations à transmettre. Cette variation de courant est détectée par la tête DIS1 par une variation de courant dans l'antenne ANT, typiquement mesurée par une augmentation de la tension aux bornes d'une résistance en série avec l'antenne ANT.

On suppose maintenant que la communication entre la carte CT et le lecteur SYS s'effectue conformément aux spécifications « EMV Contactless Specifications for Payment Systems » en particulier celles contenues dans les livres, en particulier le livre D, de la version 2.1 de mars 2011.

On suppose également dans une première variante de l'invention que les trames sont celles de type A de la spécification « EMV contactless ».

Dans une telle variante certaines trames transmises de la carte vers le lecteur comportent, comme illustré schématiquement sur la figure 3, une indication de début de trame IDT, plusieurs octets de données OCT1-OCTn, une indication de contrôle par redondance cyclique formée ici de deux octets CRC1, CRC2, et un bit de parité P après chaque octet. L'indication IDT est désignée par les lettres SOF (« Start of Frame ») dans la spécification « EMV contactless ».

Ces trames contenant des réponses de la carte peuvent être entachées d'erreurs de transmission et certaines de ces erreurs, dues en particulier aux perturbations électromagnétiques (bruit) (EMD) doivent être ignorées par le lecteur et celui-ci doit alors être capable de recevoir et de traiter une nouvelle trame (réponse) à l'issue d'une durée prédéfinie, dénommée T_{recovery} dans les spécifications EMV contactless, après la fin de la réponse entachée de ladite erreur devant être ignorée. Cette valeur est typiquement égale à 1280/f, ou f désigne la fréquence de la porteuse, soit environ 94 microsecondes pour f égal à 13,56 MHz.

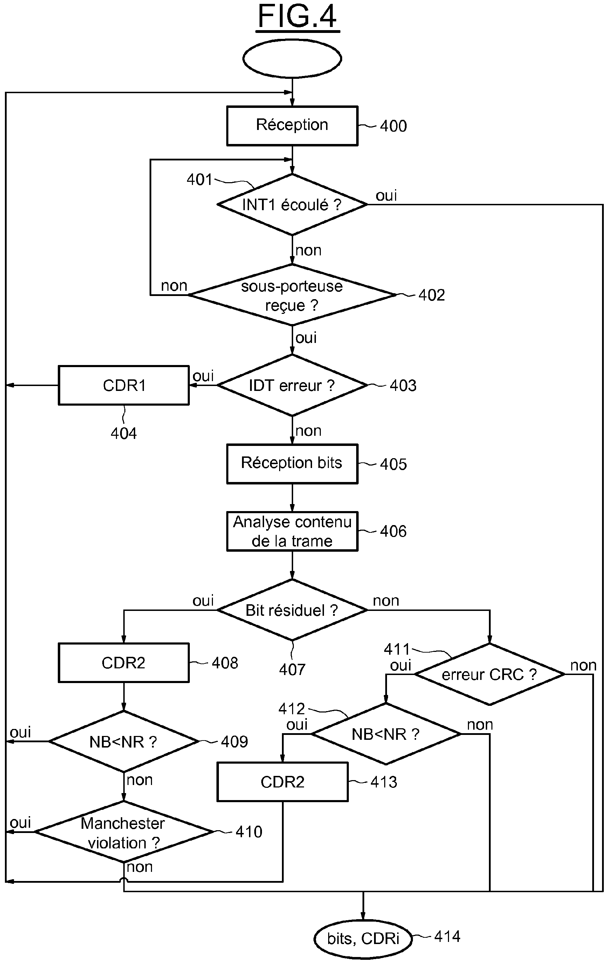

Cette détection de ces erreurs dues au bruit (EMD) va être intégralement effectuée au sein de la tête radiofréquence DIS1 par exemple en utilisant le flot d'étapes illustré sur la figure 4 mis en œuvre par les moyens de détection MDT et les moyens de commande MCL.

Les moyens de commande MCL placent l'étage radiofréquence ETRF et les moyens de détection MDT dans un état 400 dans lequel ils sont prêts à recevoir et à traiter une trame en provenance de la carte.

Dans les étapes 401 et 402 on teste si une sous-porteuse modulée est reçue à l'intérieur d'un intervalle temporel prédéfini INT1 et dénommé FWT (Frame Waiting Time) dans les spécifications EMV Contactless.

Si tel est le cas on passe à l'étape 403. Sinon il s'agit d'une erreur de transmission qui ne doit pas être ignorée et qui est transmise au module de contrôle DIS2.

Les moyens de détection MDT procèdent ensuite à une analyse 403 de l'indication de début de trame IDT.

Une erreur de transmission est considérée comme étant une erreur devant être ignorée si une erreur est détectée lors de l'analyse de l'indication de début de trame. Dans ce cas un code d'erreur CDR1 est affecté (étape 404) et les moyens de commande MCL replacent l'étage radiofréquence et les moyens de détection MDT dans l'état de réception 400.

Dans les étapes 405 et 406, on procède à la réception des différents octets et bits de la trame et à l'analyse du contenu de la trame.

Les moyens de détection vérifient (étape 407) la présence éventuelle de bits résiduels. On est en présence de bits résiduels lorsque le nombre de bits de l'ensemble des octets transmis n'est pas un multiple de 8. En présence de bits résiduels, les moyens de commande associent un code d'erreur CDR2 puis les moyens de détection déterminent si le nombre d'octets reçus NB est inférieur à un seuil NR fixé typiquement à 4 dans les spécifications EMV contactless (étape 409).

Dans le cas où le nombre d'octets NB est inférieur à NR, les moyens de commande considèrent l'erreur de transmission comme étant une erreur devant être ignorée, par exemple une erreur du type EMD, et replacent alors l'étage radiofréquence ETRF et les moyens de détection MDT dans l'état de réception 400.

Dans le cas où la trame comporte plus de 4 octets, on détermine s'il y a eu violation ou non des règles de codage de ces bits résiduels (étape 410).

En effet, les bits transmis sont codés par un codage spécifique, par exemple un codage du type Manchester, bien connu de l'homme du métier. On rappelle ici que selon la règle de codage Manchester, un « 1 » logique est codé par une transition descendante du signal située au milieu du temps bit tandis qu'un niveau « 0 » logique est codé par une transition montante du signal située au milieu du temps bit. Et, si par exemple pour ces bits résiduels, on n'observe aucune transition montante ou descendante au milieu des temps bits, il y a alors violation des règles de codage Manchester ce qui signifie que ces bits résiduels sont très probablement du bruit.

Dans ce cas, l'erreur de transmission est considérée comme une erreur devant être ignorée, par exemple une erreur du type EMD, et les moyens de commande replacent l'étage radiofréquence ETRF et les moyens de détection dans l'état de réception 400.

Dans le cas contraire, les bits résiduels sont bien des bits réels ce qui peut être le cas lors de l'utilisation de protocoles propriétaires particuliers.

Dans ce cas, on considère que la trame reçue est une trame valide et les moyens de traitement MT de la tête radiofréquence DIS1 extraient les bits de données de la trame ainsi que les bits résiduels et les transmettent au module de contrôle DIS2 (étape 414).

Ainsi le module d'émission/réception et plus globalement le lecteur, est à la fois compatible avec les spécifications « EMV contactless » et avec l'implémentation d'un protocole propriétaire, car le module d'émission/réception est capable de distinguer les bits résiduels (qui sont alors des bits réels) du bruit.

Dans le cas où dans l'étape 407, aucun bit résiduel n'est détecté, les moyens de détection analysent également l'indication de contrôle par redondance cyclique, en l'espèce les octets CRC1 et CRC2 pour déterminer si il y a une erreur à ce niveau.

Dans l'affirmative, on vérifie dans l'étape 412, le nombre d'octets NB de la trame par rapport au seuil NF. Si ce nombre NB est inférieur à NR, l'erreur de transmission est alors une erreur devant être ignorée. Les moyens de commande replacent alors l'étage radiofréquence et les moyens de détection dans l'état de réception 400 et associent à ce cas d'erreur le code d'erreur CDR3 (étape 413).

Dans le cas où aucune erreur du type CRC (contrôle par redondance cyclique) n'est détectée dans l'étape 411, la trame reçue est alors considérée comme étant valide et les bits qu'elle contient sont extraits par les moyens de traitement et transmis au module de contrôle DIS2.

Par ailleurs, le cas échéant, le ou les codes d'erreur CDRi affectés aux différents cas d'erreurs par les moyens de commande sont également transmis au module de contrôle dans le but par exemple d'effectuer une analyse fine des types d'erreur.

On suppose maintenant dans une deuxième variante de l'invention que les trames sont de type B de la spécification « EMV contactless ».

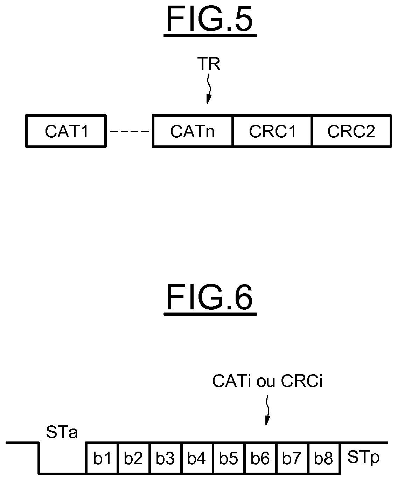

Dans une telle variante, certaines trames transmises de la carte vers le lecteur comportent comme illustré schématiquement sur la figure 5, plusieurs caractères CAT1 - CATn et une indication de contrôle par redondance cyclique formée ici de deux octets CRC1 CRC2.

Par ailleurs, comme illustré sur la figure 6, un caractère CATᵢ ou un caractère CRCi comporte un bit de début STa à l'état logique « 0 » suivi des 8 bits de données b1-b8 de l'octet contenu dans ce caractère, suivi d'un bit de stop STp à l'état logique « 1 ».

En outre, conformément aux spécifications« EMV contactless » deux caractères consécutifs de la trame sont accolés.

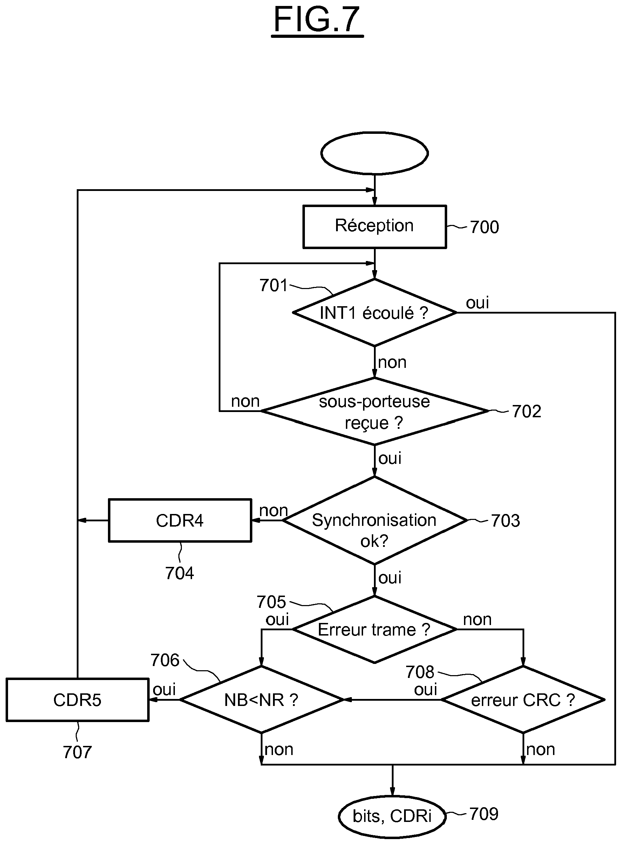

Là encore, dans cette variante, la détection des erreurs devant être ignorées, notamment les erreurs dues au bruit (EMD) va être intégralement effectuée au sein de la tête radiofréquence DIS1 par exemple en utilisant le flot d'étape illustré sur la figure 7 mise en œuvre par les moyens de détection MDT et les moyens de commande MCL.

Les moyens de commande MCL placent l'étage radiofréquence ETRF et les moyens de détection MDT dans un état 700 dans lequel ils sont prêts à recevoir et à traiter une trame en provenance de la carte.

Dans les étapes 701 et 702 on teste si une sous porteuse modulée est reçue à l'intérieur de l'intervalle INT1.

Si tel est le cas, on passe à l'étape 703. Sinon il s'agit d'une erreur de transmission qui ne doit pas être ignorée et qui est transmise au module de contrôle DIS2.

Les moyens de détection MDT vérifient ensuite que les exigences en matière de synchronisation sont remplies. De telles exigences faisant intervenir notamment des temps TR0 et TR1 sont décrites dans les spécifications « EMV contactless ».

Si ces exigences de synchronisation ne sont pas remplies il s'agit d'une erreur de transmission devant être ignorée à laquelle les moyens de commande affectent un code d'erreur CDR4 (étape 704). Les moyens de commande replacent alors l'étage radiofréquence et les moyens de détection dans l'état 700.

Dans le cas où les exigences de synchronisation sont remplies à l'étape 703, les moyens de détection procèdent ensuite à une analyse de la structure de la trame reçue (étape 705).

Si une erreur est détectée soit dans la structure et/ou le nombre des caractères CTAᵢ, alors on examine (étape 706) si le nombre NB d'octets reçus est inférieur au seuil NR (typiquement égal à 4). Si tel est le cas, les moyens de commande MCL affectent un code d'erreur CRD5 pour chacun des cas d'erreurs mentionnés ci-avant (étape 707) et replacent l'étage radiofréquence et les moyens de détection dans l'état 700 puisqu'il s'agit alors d'une erreur de transmission devant être ignorée.

Dans le cas contraire, il s'agit d'une erreur de transmission devant être traitée par le module de contrôle.

Dans le cas où dans l'étape 705 aucune erreur n'a été détectée, les moyens de détection testent la présence ou non dans l'étape 708 d'une erreur dans les octets CRC1 et CRC2.

En cas d'erreur, et si le nombre de caractères reçus est inférieur à NR, il s'agit là encore d'une erreur de transmission devant être ignorée. Dans le cas contraire, il s'agit d'une erreur de transmission qui doit être traitée par le module de contrôle DIS2.

Si aucune erreur de type CRC n'est détectée dans l'étape 708, alors la trame est parfaitement valide et les bits de celle-ci sont extraits et transmis au module de contrôle (étape 709).

Enfin, d'une façon analogue à ce qui a été décrit en référence à la figure 4, tous les codes d'erreur CRDi sont également transmis au module de contrôle.

Bien entendu dans le cas où le format des trames serait celui spécifié dans la norme ISO/IEC 14443 (types A ou B), prévoyant notamment pour le type B des indications de début et de fin de trame (« SOF », « EOF ») ainsi qu'un intervalle (« EGT ») entre chaque caractère, ces différents paramètres seraient également analysés lors de la détection des erreurs de transmission EMD.

La détection des erreurs de transmission dans le module d'émission/réception et l'auto-placement de ce module dans un nouvel état de réception après détection d'une erreur de transmission devant être ignorée, permet une discrimination plus efficace des erreurs de transmission tout permettant une satisfaction des exigences temporelles mentionnées dans les spécifications de test EMVCo, par exemple celles contenues dans le document intitulé EMVCo Type Approval Contactless Terminal Level 1, PCD Digital Test Bench & Test Cases, version 2.1a, octobre 2011.

En outre la détection intégrale des erreurs de transmission dans le seul module d'émission/réception permet, en matière satisfaction des tests EMD, de rendre compatible ce module avec tout type de module de contrôle. En effet puisque le module d'émission/réception satisfait seul aux exigences de ces tests, la combinaison module d'émission/réception-module de contrôle externe satisfait de facto à ces exigences, quel que soit le type de module de contrôle sans qu'il soit nécessaire de modifier la structure logicielle de ce module de contrôle. Cette non modification de la structure logicielle du module de contrôle facilite grandement la problématique de gestion des perturbations EMD et permet d'apporter une solution rapide en terme de développement pour couvrir les tests de certification EMVCo liés aux perturbations « EMD ».

## Revendications

1. Procédé de traitement d'erreurs de transmission lors d'une communication sans contact d'informations entre un dispositif, par exemple une carte, et un lecteur, les informations étant transmises sous forme de trames à un module d'émission/réception (DIS1) du lecteur (SYS) en couplage sans contact avec ledit dispositif (CT) et contrôlé par un module de contrôle (DIS2) couplé au module d'émission/réception, lesdites informations étant extraites desdites trames au sein du module d'émission/réception pour être délivrées au module de contrôle, le procédé comprenant une détection d'erreurs de transmission devant être ignorées intégralement effectuée au sein du module d'émission/réception (DIS1), **caractérisé en ce que** le procédé comprend, après détection d'une erreur de transmission devant être ignorée, et avant l'expiration d'une durée de référence, un auto-placement du module d'émission/réception (DIS1) dans un état (400) dans lequel il est prêt à traiter une nouvelle trame en provenance du dispositif, **en ce que** la détection d'une erreur de transmission devant être ignorée comprend l'analyse par le module d'émission/réception (DIS1) de la structure et/ou du contenu des trames reçues et/ou de règles de codage des bits transmis au sein de ces trames, et **en ce qu'**une trame comprend une indication de début de trame (IDT), plusieurs octets de données et une indication de contrôle par redondance cyclique (CRCi) et les bits contenus dans ces trames sont transmis codés par un codage, et ladite analyse comprend une analyse (403) de l'indication de début de trame, une analyse (411) de l'indication de contrôle par redondance cyclique, une analyse (409) du nombre d'octets de chaque trame, une analyse (407) de la présence ou non de bits résiduels dans une trame, et en cas de présence d'au moins un bit résiduel, une détermination (410) de la violation ou non des règles de codage de ce ou de ces bits résiduels.

2. Procédé selon la revendication 1, dans lequel lesdites erreurs de transmission devant être ignorées comprennent les erreurs dues à des perturbations électromagnétiques.

3. Procédé selon l'une des revendications 1 ou 2, dans lequel une erreur de transmission est considérée comme étant une erreur devant être ignorée dès l'occurrence de l'un au moins des cas suivants :
une erreur est détectée lors de l'analyse de l'indication de début de trame,
une présence d'au moins un bit résiduel est détectée dans une trame comportant un nombre (NB) d'octets inférieur à un seuil (NR).
une présence d'au moins un bit résiduel est détectée dans une trame comportant un nombre d'octets supérieur audit seuil avec violation des règles de codage de ce ou de ces bits résiduels,
une erreur est détectée lors de l'analyse de l'indication de contrôle par redondance cyclique dans une trame comportant un nombre d'octets inférieur audit seuil.

4. Procédé selon la revendication 3, comprenant en outre une délivrance au module de contrôle (DIS2) d'une indication de code d'erreur (CDRi) associé à chacun desdits cas.

5. Module d'émission/réception d'un lecteur, destiné d'une part à être en couplage sans contact avec un dispositif (CT) et d'autre part à être couplé à et contrôlé par un module de contrôle (DIS2), comprenant des moyens de réception (ETRF) configurés pour recevoir sous forme de trames des information en provenance du dispositif (CT), des moyens de traitement (MT) configurés pour extraire lesdites informations desdites trames et les délivrer au module de contrôle (DIS2) et des moyens de détection (MDT) configurés pour effectuer une détection d'erreurs de transmission devant être ignorées, **caractérisé en ce que** le module comprend en outre des moyens de commande (MCL) configurés pour, après détection d'une erreur de transmission devant être ignorée, et avant l'expiration d'une durée de référence, placer les moyens de réception (ETRF) et les moyens de détection (MDT) dans un état dans lequel ils sont prêts à recevoir et à traiter une nouvelle trame en provenance du dispositif, **en ce que** les moyens de détection (MDT) sont en outre configurés pour analyser la structure et/ou le contenu des trames reçues et/ou des règles de codage des bits transmis au sein de ces trames, et **en ce qu'**une trame comprend une indication de début de trame (IDT), plusieurs octets de données et une indication de contrôle par redondance cyclique et les bits contenus dans ces trames sont transmis codés par un codage, et les moyens de détection (MDT) sont configurés pour analyser l'indication de début de trame, l'indication de contrôle par redondance cyclique, le nombre (NB) d'octets de chaque trame, la présence ou non de bits résiduels dans une trame, et en cas de présence d'au moins un bit résiduel, déterminer la violation ou non des règles de codage de ce ou de ces bits résiduels.

6. Module selon la revendication 5, dans lequel lesdites erreurs de transmission devant être ignorées comprennent les erreurs dues à des perturbations électromagnétiques.

7. Module selon l'une des revendications 5 ou 6, dans lequel une erreur de transmission est considérée par les moyens de détection (MDT) comme étant une erreur devant être ignorée dès l'occurrence de l'un au moins des cas suivants :
une erreur est détectée lors de l'analyse de l'indication de début de trame,
une présence d'au moins un bit résiduel est détectée dans une trame comportant un nombre d'octets (NB) inférieur à un seuil (NR),
une présence d'au moins un bit résiduel est détectée dans une trame comportant un nombre d'octets (NB) supérieur audit seuil (NR) avec violation des règles de codage de ce ou de ces bits résiduels,
une erreur est détectée lors de l'analyse de l'indication de contrôle par redondance cyclique dans une trame comportant un nombre d'octets inférieur audit seuil.

8. Module selon la revendication 7, dans lequel les moyens de commande (MCL) sont en outre configurés pour délivrer en outre au module de contrôle une indication de code d'erreur (CDRi) associé à chacun desdits cas.

9. Module selon l'une des revendications 5 à 8, formé par une puce électronique (DIS1).

10. Lecteur, comprenant un module d'émission/réception (DIS1) selon l'une des revendications 5 à 9, et un module de contrôle (DIS2) couplé au module d'émission/réception.

## Patentansprüche

1. Verfahren zur Behandlung von Übertragungsfehlern bei einer kontaktlosen Kommunikation von Informationen zwischen einer Vorrichtung, zum Beispiel einer Karte, und einem Lesegerät, wobei die Informationen in Form von Rahmen an ein Sende-/Empfangsmodul (DIS1) des Lesegerätes (SYS) übertragen werden, das kontaktlos mit der Vorrichtung (CT) gekoppelt ist und von einem Steuerungsmodul (DIS2) gesteuert wird, das mit dem Sende-/Empfangsmodul gekoppelt ist, wobei die Informationen innerhalb des Sende-/Empfangsmoduls aus den Rahmen extrahiert werden, um dem Steuerungsmodul zugeführt zu werden, wobei das Verfahren eine Detektion von Übertragungsfehlern, die ignoriert werden müssen, umfasst, welche vollständig innerhalb des Sende-/Empfangsmoduls (DIS1) erfolgt, **dadurch gekennzeichnet, dass** das Verfahren nach Detektion eines Übertragungsfehlers, der ignoriert werden muss, und vor Ablauf einer Referenzdauer eine Selbstversetzung des Sende-/Empfangsmoduls (DIS1) in einen Zustand (400) umfasst, in welchem es bereit ist, einen von der Vorrichtung stammenden neuen Rahmen zu verarbeiten, dadurch, dass die Detektion eines Übertragungsfehlers, der ignoriert werden muss, die Analyse der Struktur und/oder des Inhalts der empfangenen Rahmen und/oder von Regeln für die Codierung der innerhalb dieser Rahmen übertragenen Bits durch das Sende-/Empfangsmoduls (DIS1) umfasst, und dadurch, dass ein Rahmen eine Rahmenbeginnanzeige (IDT), mehrere Datenoktette und eine Anzeige der zyklischen Redundanzprüfung (CRCi) umfasst und die in diesen Rahmen übertragenen Bits durch eine Codierung codiert übertragen werden, und die Analyse eine Analyse (403) der Rahmenbeginnanzeige, eine Analyse (411) der Anzeige der zyklischen Redundanzprüfung, eine Analyse (409) der Anzahl von Oktetten jedes Rahmens, eine Analyse (407) des Vorhandenseins oder Nichtvorhandenseins von Restbits in einem Rahmen und im Falle des Vorhandenseins wenigstens eines Restbits eine Bestimmung (410) der Verletzung oder Nichtverletzung der Regeln zur Codierung dieses oder dieser Restbits umfasst.

2. Verfahren nach Anspruch 1, wobei die Übertragungsfehler, die ignoriert werden müssen, die Fehler umfassen, die auf elektromagnetische Störungen zurückzuführen sind.

3. Verfahren nach einem der Ansprüche 1 oder 2, wobei ein Übertragungsfehler als ein Fehler betrachtet wird, der ignoriert werden muss, falls wenigstens einer der folgenden Fälle eintritt:
es wird ein Fehler bei der Analyse der Rahmenbeginnanzeige detektiert,
es wird ein Vorhandensein wenigstens eines Restbits in einem Rahmen detektiert, der eine Anzahl (NB) von Oktetten aufweist, die kleiner als ein Schwellenwert (NR) ist,
es wird ein Vorhandensein wenigstens eines Restbits in einem Rahmen detektiert, der eine Anzahl von Oktetten aufweist, die größer als der Schwellenwert ist, mit Verletzung der Regeln zur Codierung dieses oder dieser Restbits,
es wird ein Fehler bei der Analyse der Anzeige der zyklischen Redundanzprüfung in einem Rahmen detektiert, der eine Anzahl von Oktetten aufweist, die kleiner als der Schwellenwert ist.

4. Verfahren nach Anspruch 3, welches außerdem eine Zuführung einer Fehlercodeanzeige (CDRi), die jedem dieser Fälle zugeordnet ist, zu dem Steuerungsmodul (DIS2) umfasst.

5. Sende-/Empfangsmodul eines Lesegerätes, welches einerseits dazu bestimmt ist, mit einer Vorrichtung (CT) kontaktlos gekoppelt zu sein, und andererseits dazu, mit einem Steuerungsmodul (DIS2) gekoppelt zu sein und von ihm gesteuert zu werden, und welches Empfangsmittel (ETRF), die dafür ausgelegt sind, von der Vorrichtung (CT) stammende Informationen in Form von Rahmen zu empfangen, Verarbeitungsmittel (MT), die dafür ausgelegt sind, die Informationen aus den Rahmen zu extrahieren und sie dem Steuerungsmodul (DIS2) zuzuführen, und Detektionsmittel (MDT), die dafür ausgelegt sind, eine Detektion von Übertragungsfehlern vorzunehmen, die ignoriert werden müssen, umfasst, **dadurch gekennzeichnet, dass** das Modul außerdem Befehlsmittel (MCL) umfasst, die dafür ausgelegt sind, nach Detektion eines Übertragungsfehlers, der ignoriert werden muss, und vor Ablauf einer Referenzdauer die Empfangsmittel (ETRF) und die Detektionsmittel (MDT) in einen Zustand zu versetzen, in welchem sie bereit sind, einen von der Vorrichtung stammenden neuen Rahmen zu empfangen und zu verarbeiten, dadurch, dass die Detektionsmittel (MDT) dafür ausgelegt sind, die Struktur und/oder den Inhalt der empfangenen Rahmen und/oder Regeln für die Codierung der innerhalb dieser Rahmen übertragenen Bits zu analysieren, und dadurch, dass ein Rahmen eine Rahmenbeginnanzeige (IDT), mehrere Datenoktette und eine Anzeige der zyklischen Redundanzprüfung umfasst und die in diesen Rahmen übertragenen Bits durch eine Codierung codiert übertragen werden, und die Detektionsmittel (MDT) dafür ausgelegt sind, die Rahmenbeginnanzeige, die Anzeige der zyklischen Redundanzprüfung, die Anzahl (NB) von Oktetten jedes Rahmens und das Vorhandensein oder Nichtvorhandensein von Restbits in einem Rahmen zu analysieren und im Falle des Vorhandenseins wenigstens eines Restbits die Verletzung oder Nichtverletzung der Regeln zur Codierung dieses oder dieser Restbits zu bestimmen.

6. Modul nach Anspruch 5, wobei die Übertragungsfehler, die ignoriert werden müssen, die Fehler umfassen, die auf elektromagnetische Störungen zurückzuführen sind.

7. Modul nach einem der Ansprüche 5 oder 6, wobei ein Übertragungsfehler von den Detektionsmitteln (MDT) als ein Fehler betrachtet wird, der ignoriert werden muss, falls wenigstens einer der folgenden Fälle eintritt:
es wird ein Fehler bei der Analyse der Rahmenbeginnanzeige detektiert,
es wird ein Vorhandensein wenigstens eines Restbits in einem Rahmen detektiert, der eine Anzahl (NB) von Oktetten aufweist, die kleiner als ein Schwellenwert (NR) ist,
es wird ein Vorhandensein wenigstens eines Restbits in einem Rahmen detektiert, der eine Anzahl von Oktetten (NB) aufweist, die größer als der Schwellenwert (NR) ist, mit Verletzung der Regeln zur Codierung dieses oder dieser Restbits,
es wird ein Fehler bei der Analyse der Anzeige der zyklischen Redundanzprüfung in einem Rahmen detektiert, der eine Anzahl von Oktetten aufweist, die kleiner als der Schwellenwert ist.

8. Modul nach Anspruch 7, wobei die Befehlsmittel (MCL) außerdem dafür ausgelegt sind, dem Steuerungsmodul außerdem eine Fehlercodeanzeige (CDRi) zuzuführen, die jedem dieser Fälle zugeordnet ist.

9. Modul nach einem der Ansprüche 5 bis 8, welches von einem Mikrochip (DIS1) gebildet wird.

10. Lesegerät, welches ein Sende-/Empfangsmodul (DIS1) nach einem der Ansprüche 5 bis 9 und ein Steuerungsmodul (DIS2), das mit dem Sende-/Empfangsmodul gekoppelt ist, umfasst.

## Claims

1. Method for processing transmission errors during contactless communication of information between a device, for example a card, and a reader, the information being transmitted in the form of frames to a transceiver module (DIS1) of the reader (SYS) coupled contactlessly to said device (CT) and controlled by a control module (DIS2) coupled to the transceiver module, said information being extracted from said frames within the transceiver module in order to be delivered to the control module, the method comprising detecting transmission errors to be ignored, performed entirely within the transceiver module (DIS1), **characterized in that** the method comprises, after detecting a transmission error to be ignored, and before the expiry of a reference time, a self-placing of the transceiver module (DIS1) into a state (400) in which it is ready to process a new frame from the device, **in that** detecting a transmission error to be ignored comprises analysing, by the transceiver module (DIS1), the structure and/or the content of the received frames and/or coding rules for the bits transmitted within these frames, and **in that** a frame comprises a start of frame indication (IDT), several bytes of data and a cyclic redundancy check indication (CRCi), and the bits contained in these frames are transmitted in a form coded by coding, and said analysis comprises analysing (403) the start of frame indication, analysing (411) the cyclic redundancy check indication, analysing (409) the number of bytes of each frame, analysing (407) the presence or absence of residual bits in a frame, and, if at least one residual bit is present, determining (410) whether or not the coding rules for this or these residual bits have been violated.

2. Method according to Claim 1, wherein said transmission errors to be ignored comprise errors caused by electromagnetic interference.

3. Method according to either of Claims 1 and 2, wherein a transmission error is considered to be an error to be ignored as soon as at least one of the following cases occurs:
an error is detected when analysing the start of frame indication,
presence of at least one residual bit is detected in a frame containing a number (NB) of bytes lower than a threshold (NR),
presence of at least one residual bit is detected in a frame containing a number of bytes greater than said threshold, with the coding rules for this or these residual bits being violated,
an error is detected when analysing the cyclic redundancy check indication in a frame containing a number of bytes lower than said threshold.

4. Method according to Claim 3, furthermore comprising delivering an error code indication (CDRi) associated with each of said cases to the control module (DIS2).

5. Transceiver module of a reader, intended firstly to be coupled contactlessly to a device (CT) and secondly to be coupled to and controlled by a control module (DIS2), comprising reception means (ETRF) configured so as to receive information from the device (CT) in the form of frames, processing means (MT) configured so as to extract said information from said frames and deliver it to the control module (DIS2) and detection means (MDT) configured so as to detect transmission errors to be ignored, **characterized in that** the module furthermore comprises control means (MCL) configured, after detecting a transmission error to be ignored, and before the expiry of a reference time, to place the reception means (ETRF) and the detection means (MDT) into a state in which they are ready to receive and to process a new frame from the device, **in that** the detection means (MDT) are furthermore configured so as to analyse the structure and/or the content of the received frames and/or the coding rules for the bits transmitted within these frames, and **in that** a frame comprises a start of frame indication (IDT), several bytes of data and a cyclic redundancy check indication, and the bits contained in these frames are transmitted in a form coded by coding, and the detection means (MDT) are configured so as to analyse the start of frame indication, the cyclic redundancy check indication, the number (NB) of bytes of each frame, the presence or absence of residual bits in a frame, and, if at least one residual bit is present, determine whether or not the coding rules for this or these residual bits have been violated.

6. Module according to Claim 5, wherein said transmission errors to be ignored comprise errors caused by electromagnetic interference.

7. Module according to either of Claims 5 and 6, wherein a transmission error is considered by the detection means (MDT) to be an error to be ignored as soon as at least one of the following cases occurs:
an error is detected when analysing the start of frame indication,
presence of at least one residual bit is detected in a frame containing a number of bytes (NB) lower than a threshold (NR),
presence of at least one residual bit is detected in a frame containing a number of bytes (NB) greater than said threshold (NR), with the coding rules for this or these residual bits being violated,
an error is detected when analysing the cyclic redundancy check indication in a frame containing a number of bytes lower than said threshold.

8. Module according to Claim 7, wherein the control means (MCL) are furthermore configured so as to furthermore deliver an error code indication (CDRi) associated with each of said cases to the control module.

9. Module according to one of Claims 5 to 8, formed by an electronic chip (DIS1).

10. Reader comprising a transceiver module (DIS1) according to one of Claims 5 to 9 and a control module (DIS2) coupled to the transceiver module.
